# EUROPÄISCHE PATENTANMELDUNG

(11) **EP 3 913 301 A1**
(43) Veröffentlichungstag der Anmeldung: **24.11.2021**
(21) Anmeldenummer: 21174715.9
(22) Anmeldetag: 19.05.2021
(51) Int. Cl.: F25B 30/02, F24D 3/18, F25D 17/02

(54) **WÄRMEPUMPENANLAGE**

(30) Priorität: 20.05.2020 DE 102020113607
(71) Anmelder: Vaillant GmbH, 42859 Remscheid (DE)
(72) Erfinder: Forner, Pascal, 42857 Remscheid (DE)
(74) Vertreter: Popp, Carsten

(57) **Zusammenfassung**

Wärmepumpensystem aus einer Vielzahl von Wärmepumpen zur sicheren Durchführung linksdrehender thermodynamischer Kreisprozesse (7) mittels entzündlicher Arbeitsfluide, die in hermetisch dichten Arbeitsfluidumläufen geführt werden, wobei jede der Wärmepumpen zur Aufstellung innerhalb eines Raumes in einem Gebäude geeignet ist und jeweils ein Wärmepumpengehäuse, mindestens einen Kompressor (8) für Arbeitsfluid, mindestens eine Entspannungseinrichtung (10) für Arbeitsfluid, mindestens einen Kondensator (9) für Arbeitsfluid und mindestens einen Verdampfer (6) für Arbeitsfluid aufweist, wobei entweder die Kondensatoren (9) oder die Verdampfer (6) aller Wärmepumpen des Wärmepumpensystems oder beide an eine Ringleitung (3, 13) angeschlossen sind, welche ein Wärmeträgerfluid führt, die Ringleitung (3, 13) an eine externe Wärmequelle und/oder an eine Wärmesenke angeschlossen ist, die einzelnen Wärmepumpen jeweils über Abzweige (5) von der Ringleitung (3, 13) angeschlossen sind, wobei der Abzweig (5) jeweils eine Zuflussseite und eine Abflussseite bezüglich der Ringleitung (3,13) aufweist., die Zuflussseiten und Abflussseiten der Abzweige (5) von der Ringleitung (3,13) so angeordnet werden, dass auf erwärmten Abflussseiten in Strömungsrichtung Zuflussseiten von Wärmenutzungen folgen, die Zuflussseiten und Abflussseiten der Abzweige (5) von der Ringleitung (3, 13) so angeordnet werden, dass auf abgekühlte Abflussseiten in Strömungsrichtung Zuflussseiten von Kältenutzungen folgen, und die Menge an entzündlichem Arbeitsfluid in jeder der Wärmepumpen auf insgesamt jeweils 150 Gramm beschränkt wird.

## Beschreibung

Die Erfindung betrifft eine Anlage mit Kältekreisen, in denen ein als Kältemittel wirkendes, entzündliches Arbeitsfluid in einem thermodynamischen Kreisprozess, wie zum Beispiel dem Clausius-Rankine-Kreisprozess, geführt wird. Vorwiegend sind dies Wärmepumpen, Klimaanlagen und Kühlgeräte, wie sie in Wohngebäuden, im Einzelhandel oder in Gewerbebetrieben gebräuchlich sind. Insbesondere betrifft die Erfindung eine Anordnung und den Betrieb einer Vielzahl von Wärmepumpen, die innerhalb eines Wohngebäudes oder eines Handelsgeschäfts in unterschiedlichen Räumen aufgestellt werden.

Unter Wohngebäuden werden dabei Privathäuser, Miethauskomplexe, Krankenhäuser, Hotelanlagen, Gastronomie und kombinierte Wohn- und Geschäftshäuser verstanden, in denen Menschen dauerhaft leben und arbeiten, im Unterschied zu mobilen Vorrichtungen wie KFZ-Klimaanlagen oder Transportboxen, oder auch Industrieanlagen oder medizintechnischen Geräten. Unter Einzelhandelsgeschäfte werden verstanden Supermärkte, Einkaufszentren, Shopping-Malls mit einer Vielzahl von einzelnen Geschäften, aber auch beispielsweise Gemüse- und Frischwarenhändler, die Kühlräume betreiben. Unter Gewerbebetrieben werden Wäschereien, Werkstätten, lebensmittelverarbeitende und landwirtschaftliche Betriebe und andere Serviceeinrichtungen verstanden.

Gemeinsam ist den Kreisprozessen, dass sie unter Einsatz von Energie Nutzwärme oder Nutzkälte erzeugen und Wärmeverschiebungssysteme bilden. Diese Wärmeverschiebungssysteme können Wärmeenergie aus einem zu kühlenden Bereich entnehmen, sie auf ein höheres Temperaturniveau heben und auf diesem höheren Niveau wieder abgeben. Solche Anwendungen dienen im Sommer zur Raumkühlung und sonst zur Kühlung von Lebensmitteln in Kühlkammern, Kühltruhen und Gefriertruhen, im Winter dienen sie überwiegend zur Beheizung. Durchgängig dienen sie außerdem zur Warmwasserbereitung.

Während in Ein -und Mehrfamilienwohnhäusern die Wärmepumpen typischerweise herkömmliche Zentralheizungen ersetzen und daher in vorhandene Räumlichkeiten und an vorhandene Anschlüsse passen müssen, ist man bei Neubau und Konzeption größerer Einheiten in der Planung freier. So können verschiedene Wärmequellen und Wärmesenken zum Einsatz kommen, als Energiequelle können Solaranlagen ggf. in Verbindung mit anderen elektrischen Energiequellen dienen. Dennoch wurde oft das Konzept beibehalten, dass eine zentrale Wärmepumpe alle Verbraucher versorgt.

Alternativ wurden in der Vergangenheit in Mehrfamilienhäusern wandhängende Gas-Heizgeräte, häufig mit integrierter Warmwasser-Bereitung im Durchlaufprinzip als sogenannte Etagenheizung eingesetzt, also ein Gerät je Wohnung. Wenn man die Beheizung dieser MFH auf Wärmepumpe umstellt, ergibt sich die Frage der Warmwasserbereitung. Ein Einbau einer zentralen Warmwassererzeugung und dem zugehörigen Rohrnetz ist äußerst aufwändig. Eine nachträglich einzubauende dezentrale Warmwasserbereitung mit sogenannten "Heizungssatelliten", also durch das Heizungswasser erwärmte Brauchwasserspeicher in jeder Wohnung, erfordert ganzjährig hohe Heizungswassertemperaturen und führt zu entsprechend schlechtem COP (Coefficient of Performance). Eine Warmwasser-bereitung mit elektrischen Durchlauferhitzern ist energetisch auch nicht vorteilhaft.

Ein Beispiel dafür wird in der Firmendruckschrift von Viessmann "ESyCool green, Nachhaltige Energiesystem für den Lebensmitteleinzelhandel, 11/2018" beschrieben. Hierbei wird eine zentrale Wärmepumpenanlage zur Kälteerzeugung genutzt, wobei die Kälte mittels eines Wärmeträgerfluids an Kühlregale im Verkaufsraum und an eine Kühlzelle und eine Tiefkühlzelle im Lager geführt wird, während Wärme zur Beheizung dient. Die Anlage kann solar betrieben werden und sowohl Wärme als auch Kälte speichern, wobei die Speicher und die Energieversorgung an die zentrale Wärmepumpenanlage angeschlossen werden.

Alternativ wurde bereits in der DE OS 24 01 556 vorgeschlagen, einen Heizkreislauf mit einer Temperatur zwischen der Umgebungstemperatur und der gewünschten Raumtemperatur zu betreiben und in jedem der einzelnen Räume eine eigene Wärmepumpe zur separaten Erwärmung zuzuordnen. Auch eine Raumkühlung mittels einer Wärmepumpe, die ihre Abwärme in die gemeinsame Heizleitung einzuspeisen hätte, wurde bereits vorgeschlagen.

Die DE 10 2016 115 824 A1 schlägt vor, ein Wärmeträgerfluid mit einer Vorlauf- und einer Rücklaufleitung dazu zu benutzen, sowohl Räume als auch Aggregate zu temperieren, die Temperierung kann sowohl kühlend als auch erhitzend erfolgen. Hierzu dienen jeweils einzelne Wärmepumpen, die die jeweilige erforderliche Nutztemperatur, also entweder Nutzwärme oder Nutzkälte, bereitstellen. Es wird dabei das technische Problem behandelt, dass die Entnahme und die Rückgabe der Volumenströme aus Vorlaufleitung und Rücklaufleitung regelungstechnisch schwer beherrschbar sind. Aus diesem Grund werden ein separater Header-Kreislauf für den Vorlauf und ein weiterer separater Header-Kreislauf für den Rücklauf vorgeschlagen. Die beiden Kreisläufe können auch miteinander verbunden werden. Die einzelnen Wärmepumpen werden jedoch nicht direkt miteinander verbunden, sondern kommunizieren nur mit den jeweiligen Headern, aus denen sie Wärme entnehmen oder in die sie Wärme hinein abgeben.

Andere Systeme beschränken sich entweder auf die Kühlung und ordnen jedem Raum eine Wärmepumpe als Klimaanlage zu, wie es beispielsweise die WO 2011/041408 A2 lehrt, oder sie beschreiben Gefrierkreisläufe wie die JP 2013- 148 330 A, bei denen zwei kaskadierende Wärmepumpen einen ersten Kälteträgerkreislauf und einen weiteren Kälteträgerkreislauf mit einer tieferen Temperatur erzeugen, wie es beispielsweise bei kombinierten Kühltheken und Gefriertheken in Supermärkten benötigt wird. Die Wärme, die die kaskadierenden Wärmepumpen in die Kreislaufsysteme abführen, kann dabei als Wärmequelle für andere Anwendungen genutzt werden. Es ist jedoch nicht vorgesehen, nutzerseitige Wärmequellen und Wärmesenken kaskadierend direkt miteinander zu verbinden.

Üblicherweise werden solche Anlagen so konzipiert, dass die Wärme, alternativ die Kälte, oder auch beide parallel, zunächst in einer einzigen Anlage erzeugt werden, danach auf Wärmeträgerfluide übertragen und danach auf einzelne Verbraucher verteilt werden. Damit nutzt man zwar bekannte Skalenvorteile, die zentrale Lösung hat jedoch auch Nachteile: Zum einen haben Wärmepumpen einen relativ kleinen Regelbereich, werden aber meistens in Teillast betrieben. Auch das führt zu einem ungünstigen COP (coefficent of performance). Zum anderen führt ein Betrieb mit brennbaren, entzündlichen Arbeitsfluiden zu hohen Sicherheitsanforderungen, diese Anforderungen steigen stark mit dem brennbaren Inventar. Im Fall einer Störung ist immer die Gesamtanlage betroffen.

Um dies zu vermeiden, wird großer Aufwand getrieben. So wird entweder eine mechanische, zwangsweise Entlüftung des Aufstellraums oder Maschinenraum oder des Gehäuses der Wärmepumpe, entweder dauerhaft oder aktiviert über einen Kältemitteldetektor durchgeführt.

Alternativ ist eine Installationsvorgabe für die Größe des Aufstellraums abhängig von der Kältemittel-Füllmenge zu beachten. Die Entlüftung muss zum Äußeren des Gebäudes erfolgen, dies erfordert ein Rohrsystem und einen zusätzlichen Mauerdurchbruch. Bei dauerhafter Belüftung entstehen Energieverluste, wenn warme Innenluft nach Außen geführt und durch kalte Außenluft ersetzt wird. Bei dauerhafter Belüftung ist stetig, also auch im Stand-By der Wärmepumpe, Antriebsenergie für den Lüfter erforderlich. Bei Aktivierung mittels Kältemitteldetektor entsteht zusätzlicher Aufwand für den Detektor und Wartungsaufwand, um die Sicherheitsfunktion aufrecht zu erhalten. Bei entflammbaren Kältemitteln und Kältemitteln mit erhöhter Entflammbarkeit sind die erforderlichen Raumgrößen im Wohnungsbau nicht realisierbar. Beide Maßnahmen erfordern die korrekte Umsetzung am Installationsort und entziehen sich dadurch der Kontrolle des Herstellers der Wärmepumpe.

Sofern aber viele Wärmepumpen an einem oder zwei gemeinsamen Headern angeschlossen werden, aus denen sie alle auf verschiedenen Temperaturstufen entweder Wärme entnehmen oder in sie abgeben, entsteht zwar der Vorteil, dass die einzelnen Wärmepumpen nur noch viel geringere Temperaturverschiebungen überwinden müssen, was deren Dimensionierung und deren Kältemittelinventar unter kritischen Größen zulässt, aber der COP sinkt, da durch die Mischung der verschieden temperierten Zuströme in den Headern eine Degradation der Wärmeniveaus stattfindet. Sofern diese gemeinsamen Header selbst wieder an Wärmepumpen angeschlossen sind, die der Umwelt Wärme entnehmen oder an sie abgeben, entsteht zwangsläufig ein Zielkonflikt bei der COP-Optimierung.

So möchte man im Falle der Wärmeentnahme aus einem Header nur eine möglichst geringe Temperaturanhebung beim Wärmenutzer vornehmen, um das Kältemittelinventar niedrig halten zu können. Bei der Wärmeentnahme wird ein Teilstrom des Wärmeträgerfluids abgekühlt, wenn dasselbe Wärmeträgerfluid dann nach Zumischung des abgekühlten Wärmeträgerfluids zum nachfolgenden Wärmeentnehmer gelangt, vergrößert sich dessen Erfordernis der Temperaturanhebung entsprechend. Gleiches gilt, wenn Kältenutzer aufeinanderfolgen. Es wäre also sinnvoll, wenn Aggregate aufeinander in Strömungsrichtung folgen, die diese Tendenz gegenseitig ausgleichen. Dann haben die Wärme-bzw. Kälteversorger der jeweiligen Header nur noch die Gesamtbilanz auszugleichen.

Die Aufgabe der Erfindung ist daher, diese Probleme durch ein geeignetes Wärmepumpensystem auf wirtschaftliche Weise zu lösen. Die Erfindung löst diese Aufgabe durch ein Wärmepumpensystem aus einer Vielzahl von Wärmepumpen zur sicheren Durchführung linksdrehender thermodynamischer Kreisprozesse mittels gefährlicher Arbeitsfluide, die in hermetisch dichten Arbeitsfluidumläufen geführt werden, wobei jede der Wärmepumpen ein Wärmepumpengehäuse, mindestens einen Kompressor für Arbeitsfluid, mindestens eine Entspannungseinrichtung für Arbeitsfluid, mindestens einen Kondensator für Arbeitsfluid und mindestens einen Verdampfer für Arbeitsfluid aufweist, wobei
- Entweder die Kondensatoren oder die Verdampfer aller Wärmepumpen des Wärmepumpensystems oder beide an eine Ringleitung angeschlossen sind, welche ein Wärmeträgerfluid führt,
- die Ringleitung an eine externe Wärmequelle und/oder an eine Wärmesenke angeschlossen ist.
- die einzelnen Wärmepumpen jeweils über Abzweige (5) von der Ringleitung (3, 13) angeschlossen sind, wobei der Abzweig (5) jeweils eine Zuflussseite und eine Abflussseite bezüglich der Ringleitung (3,13) aufweist
- die Zuflussseiten und Abflussseiten der Abzweige (5) von der Ringleitung (3,13) so angeordnet werden, dass auf erwärmten Abflussseiten in Strömungsrichtung Zuflussseiten von Wärmenutzungen folgen,
- die Zuflussseiten und Abflussseiten der Abzweige (5) von der Ringleitung (3, 13) so angeordnet werden, dass auf abgekühlte Abflussseiten in Strömungsrichtung Zuflussseiten von Kältenutzungen folgen,
- wobei die Menge an entzündlichem Arbeitsfluid in jeder der Wärmepumpen auf insgesamt jeweils 150 Gramm beschränkt wird.

Die Wärmepumpen werden dabei meist jede in einem eigenen Aufstellungsraum aufgestellt, also in jedem Zimmer, welches geheizt oder gekühlt werden soll, eine separate Wärmepumpe und auch in jedem Kühlraum bzw. jedem Raum oder jeder abgeschlossenen Einrichtung mit Kältenutzung. Ein wichtiger Vorteil dabei ist, dass bei einer Störung immer nur ein einzelner Raum betroffen ist.

Entsprechend den einzelnen lokalen Bestimmungen wird zwischen verschiedenen Räumen unterschieden, wobei es auf die Zugangsbereiche und die befugten Personen, die diese betreten dürfen, ankommt. Unterschieden wird hierbei zwischen Maschinenräumen und Personen-Aufenthaltsbereichen. Für diese Räume werden entsprechend der jeweiligen benutzten Kältemittel und deren jeweiligem Gefährdungspotenzial und der jeweiligen Belüftungsverhältnisse der Räumlichkeiten maximale Kältemittelkonzentrationen festgelegt, die in der Raumluft erreicht werden könnten, und die bei Fehlfunktionen wie z.B. Leckagen nicht überschritten werden dürfen. Beispielsweise definiert die DIN EN 378 hierfür Grenzwerte für die jeweiligen Füllmengen.

Sofern die Gesamtfüllmengen an Arbeitsfluid auch in der Summe für mehrere Wärmepumpen die zulässigen Maximalmengen für Sicherheitsanforderungen nicht überschreiten, können auch mehrere Wärmepumpen mit unterschiedlichen Funktionen im selben Raum verwendet werden, der Fachmann wird sich dabei an den sich häufig ändernden länderspezifischen Normen und Regeln zu orientieren haben. Es ist jedoch nicht vorgesehen, dass irgendeine der Wärmepumpen mehrere Räume zentral versorgt, optional ist dies aber natürlich in Sonderfällen auch möglich.

Es ist vorgesehen, dass die einzelnen Wärmepumpen jeweils über Abzweige von der Ringleitung angeschlossen sind, wobei der Abzweig jeweils eine Zuflussseite und eine Abflussseite bezüglich der Ringleitung aufweist. Je nachdem ob es eine Nutzwärmeanwendung oder eine Nutzkälteanwendung ist, für die die jeweilige Wärmepumpe vorgesehen ist, sind Zuflussseite und Abflussseite der Ringleitung jeweils an den Verdampfer oder den Kondensator derjenigen Wärmepumpe angeschlossen. Die Zuflussseite der Ringleitung kommt dabei vom Verdampfer oder Kondensator, die Abflussseite der Ringleitung führt zu ihm hin. Dient die Wärmepumpe Wärmenutzungen, führt die Abflussseite von der Ringleitung zum Verdampfer, wo das Wärmeträgerfluid abgekühlt und das Arbeitsfluid erwärmt wird, und die Zuflussseite führt das abgekühlte Wärmeträgerfluid wieder zur Ringleitung zurück. Dient die Wärmepumpe Kältenutzungen, führt die Abflussseite von der Ringleitung zum Kondensator, wo das Wärmeträgerfluid erwärmt und das Arbeitsfluid abgekühlt wird, und die Zuflussseite führt das erwärmte Wärmeträgerfluid wieder zur Ringleitung zurück. Denkbar wäre aus installationspraktischen Gründen, diese beiden Anschlüsse für jede der Wärmepumpen nebeneinander vorzunehmen. Aus thermodynamischen Gründen ist eine andere Anschlussweise jedoch vorteilhafter.

In weiteren Ausgestaltungen ist daher vorgesehen, dass die Zuflussseiten und Abflussseiten der Abzweige von der Ringleitung so angeordnet werden, dass auf erwärmten Abflussseiten der Ringleitung in Strömungsrichtung Zuflussseiten von Wärmenutzungen angeschlossen werden. Die vergleichsweise höhere Eintrittstemperatur des Wärmeträgerfluids im Verdampfer verringert die zu überwindende Temperaturdifferenz durch die Wärmepumpe. Alternativ kann ebenso vorgesehen werden, die Zuflussseiten und Abflussseiten der Abzweige von der Ringleitung so angeordnet werden, dass auf abgekühlte Zuflussseiten in Strömungsrichtung Abflussseiten von Kältenutzungen folgen. Die vergleichsweise niedrigere Eintrittstemperatur des Wärmeträgerfluids im Kondensator verringert die zu überwindende Temperaturdifferenz durch die Wärmepumpe ebenfalls. Beide Maßnahmen führen sowohl zu einem besseren Wirkungsgrad als auch dazu, dass die Wärmepumpe kleiner dimensioniert werden kann, also auch weniger gefährliches Arbeitsfluid enthält, was den Aufwand an Sicherheitstechnik verringert.

Eine weitere Verringerung des apparativen und energetischen Aufwands durch Wirkungsgraderhöhung ist in einer vorteilhaften Ausgestaltung vorgesehen, bei der einzelne Wärmepumpen verschiedener Räume kaskadenartig so mit Verbindungsleitungen verknüpft werden, dass in Kondensatoren erwärmtes Wärmeträgerfluid aus Wärmepumpen für Kältenutzungen durch die Verbindungsleitungen in Verdampfer von Wärmepumpen für Wärmenutzungen geführt werden, oder dass in Verdampfern abgekühltes Wärmeträgerfluid aus Wärmepumpen für Wärmenutzungen durch die Verbindungsleitungen in Kondensatoren von Wärmepumpen für Kältenutzungen geführt werden,

Der Fachmann wird zwischen diesen Alternativen in jedem Einzelfall diejenigen auswählen, die insgesamt dazu führen, dass möglichst alle Wärmepumpen hinsichtlich der Sicherheitsanforderungen unter den Grenzwerten für Füllmengengrenzen an Arbeitsfluid bleiben können, möglichst viele Wärmepumpen identischer Bauart eingesetzt werden können und der Gesamtenergieverbrauch optimiert wird.

Die Vorteile der Erfindung bestehen in der Vermeidung des konstruktiven, baulichen und energetischen Aufwands bei gleichzeitiger Gewährleistung der Sicherheit des Betreibers auch im Fall einer Leckage am Kältekreis. Bei der Ausführung als Einzelraumheizung wird nur eine gemeinsame Leitung auf der Quellenseite benötigt, etwa von einer Erdbohrung oder einem Luft-Sole-Wärmeübertrager an die einzelnen Räume einer Wohnung. Diese Leitung muss nicht wärmegedämmt sein. In jedem beheizten Raum wird ein "Mini-Kältekreis" vorgesehen. Nicht immer ist kein Sekundärmedium erforderlich, die Wärme kann direkt an die Luft abgegeben werden, entweder mit Unterstützung durch einen Lüfter oder mit passiven Heizflächen ähnlich einem bekannten Heizkörper als Verflüssiger. Auch Verflüssiger in Form einer direkten Beheizung von Fußböden oder Wandflächen sind denkbar, wobei natürlich auch ein Sekundärmedium eingesetzt werden kann.

Statt eines Heizkreises können auch Klimatisierungen oder Kühlaggregate mit den Kleinwärmepumpen versorgt werden, die alle an dieselbe Ringleitung angeschlossen sind.

Eine weitere Möglichkeit sind Kaskaden-Ausführungen. Bei Nutzkälte-Anwendungen sind derartige Kaskaden als Kühl-Gefrierkombis gut bekannt, bei Heizungs-Wärmepumpen sind derartige Kaskadenschaltungen üblich, wenn beispielsweise Niedertemperaturwärme für Fußbodenheizungen und Heißwasser zum Duschen bereitgestellt werden sollen. Während praktische Vorteile bei der konstruktiven Ausgestaltung bestehen, sind jedoch Nachteile bei den Wirkungsgraden hinzunehmen, da relativ große Temperaturspreizungen zwischen der Wärmequelle und der jeweils höheren der Nutztemperaturen bei Erwärmung und ebenfalls relativ hohe Temperaturspreizungen zwischen der Wärmesenke und der niedrigsten Kalttemperatur bei Nutzkälteanwendungen auftreten.

Bei den erfindungsgemäßen Kaskadenschaltungen wird jedoch jeweils eine Nutzwärmeanwendung mit einer Nutzkälteanwendung gekoppelt verwendet. Hierdurch verschiebt sich das Temperaturniveau entweder nach oben oder nach unten, die wesentlich geringere Temperaturspreizung führt in beiden Fällen zu deutlich höheren Wirkungsgraden. Natürlich können bei ungleichen Wärmemengen auch mehrere Nutzwärme-oder Nutzkälteanwendungen so zusammengefasst werden, dass sich die Wärmeströme gegenseitig ausgleichen.

Die Wärmeübertrager des gemeinsamen Kreislaufs werden parallel durch eine zentrale Pumpe durchströmt. Üblicherweise würde man eine sogenannte "Tichelmann"-Verrohrung erstellen, falls dies baulich möglich ist, bei der die Druckverluste durch Rohrleitungen für jeden Wärmeübertrager annähernd gleich sind. Allerdings muss über den jeweiligen Druckverlust auch die Menge geregelt werden können, die vom Wärmeübertrager jeweils aufgenommen oder abgegeben werden soll.

Im Rahmen der Erfindung sind auch bekannte Kältekreise mit Umkehr-Operation, bei denen durch ein Vier-Wege-Ventil zwischen Nutzwärme (Heizung) und Nutzkälte (Raumkühlung) wechseln kann, in den Gesamtkreislauf integrierbar.

Die Erfindung wird nachfolgend anhand von fünf Skizzen näher erläutert. Dabei zeigen die Fig. 1 schematisch eine Ausführungsform bei Räumen mit Wärmebedarf, Fig. 2 eine Ausführungsform bei Räumen mit Kältebedarf und Fig. 3 eine Ausführungsform bei Räumen mit Wärme- und welchen mit Kältebedarf. Fig. 4 und 5 zeigen zwei Beispiele mit kaskadierend gekoppelten Wärmepumpen mit Wärme- und Kältebedarf.

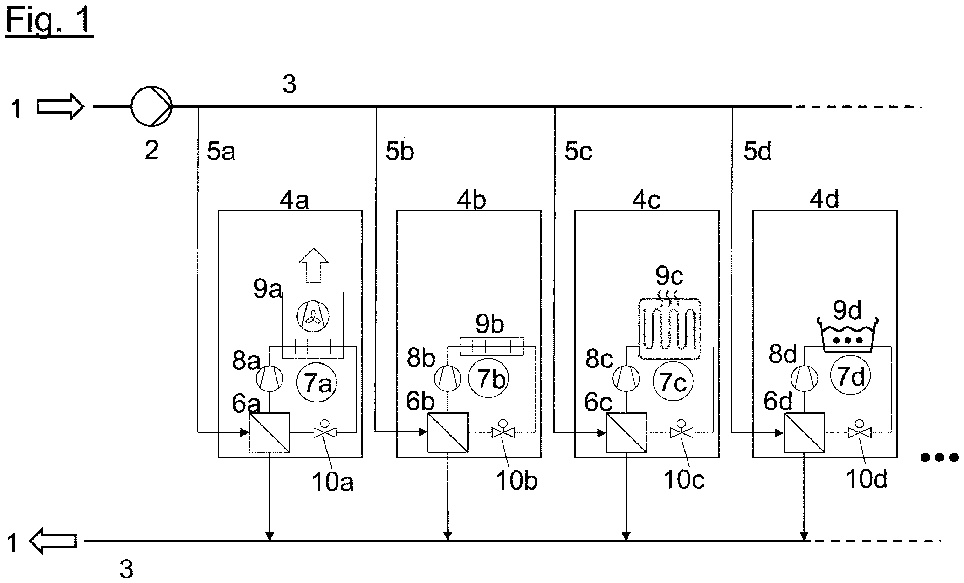

Fig. 1 zeigt einen Wärmeträgerfluidkreislauf 3 in einem Gebäude, wobei der Wärmeträgerfluidkreislauf 3 an eine Wärmequelle 1 außerhalb des Gebäudes angeschlossen ist und von einer Umwälzpumpe 2 ständig durch eine Ringleitung gefördert wird. Für jeden der Räume 4a, 4b, 4c und 4d wird je ein eigener Abzweig 5a, 5b, 5c, 5d zum jeweiligen Verdampfer 6a, 6b, 6c,6d geleitet, wo Wärme an den Wärmepumpen-Kreisprozess 7a, 7b, 7c, 7d abgegeben wird. In den Verdampfern 6a, 6b, 6c, 6d wird Arbeitsfluid verdampft und dampfförmig von den Kompressoren 8a, 8b, 8c, 8d verdichtet, wobei es sich erwärmt. Die Wärme wird dann als Nutzwärme in die einzelnen Räume 4a, 4b, 4c und 4d verteilt, wobei in jedem der Räume mindestens je eine eigene Wärmepumpe installiert ist. Nach Abgabe der Wärme, in der Regel durch Kondensation des Arbeitsfluids im jeweiligen Kondensator 9a, 9b, 9c und 9d, wird das kondensierte Arbeitsfluid im Entspannungsventil 10a, 10b, 10c und 10d entspannt, wobei es teilweise verdampft, und danach wieder in den jeweiligen Verdampfer 6a, 6b, 6c,6d geleitet, wo es Wärme auf niedrigem Temperaturniveau aufnimmt und dabei vollständig verdampft.

Je nach Bedarf können die Räume 4a, 4b, 4c und 4d dabei mit unterschiedlichen Wärme-Abnehmern ausgestattet sein. Das Beispiel zeigt 4a als einen Raum mit einem zwangsbelüfteten Radiator, Raum 4b mit einem typischen Heizkörper, Raum 4c mit einer Fußbodenheizung und Raum 4d mit einem Warmwasserverbraucher, also beispielsweise einer Dusche oder einem Bad, wobei die Wärmeabnehmer jeweils mit dem entsprechenden Kondensator 9a, 9b, 9c und 9d ausgestattet sind.

Auf diese Weise kann jeder der Räume mit den jeweiligen Temperaturverhältnissen und Wärmemengen ausgestattet werden. Die jeweiligen Wärmepumpen-Kreisprozesse 7a, 7b, 7c, 7d können entsprechend unterschiedlich dimensioniert und betrieben werden, vor allem können die Arbeitsfluide entsprechend dem gewünschten Temperaturniveau für die Wärmeabgabe unterschiedlich gewählt werden. Selbstverständlich können auf diese Weise auch wesentlich mehr Räume ausgestattet und versorgt werden. Anders als bei herkömmlichen zentralen Wärmepumpen hat der modulare Aufbau den Vorteil, dass problemlos nach- und umgerüstet werden kann, ohne auf Regelungs- oder Sicherheitsprobleme Rücksicht nehmen zu müssen.

Die Mengen der jeweils benötigten Arbeitsfluide pro Wärmepumpe können dabei so gering sein, dass auf aufwändige Sicherheitseinrichtungen verzichtet werden kann, die Füllmengen entsprechen denen handelsüblicher Haushalts-Kühl- oder Gefrierschränke.

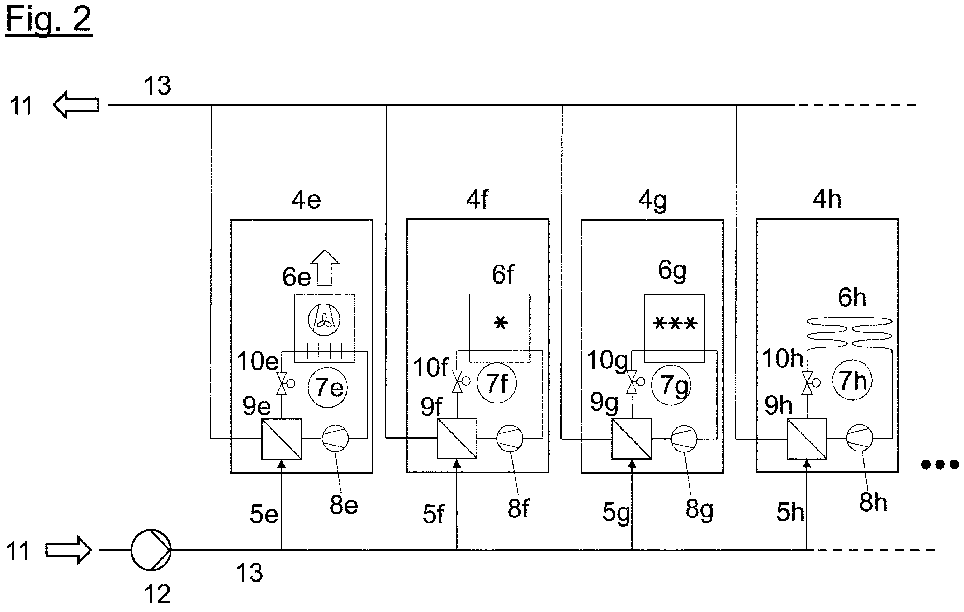

Fig. 2 zeigt einen Wärmeträgerfluidkreislauf 13 in einem Gebäude, wobei der Wärmeträgerfluidkreislauf 13 an eine Wärmesenke 11 außerhalb des Gebäudes angeschlossen ist und von einer Umwälzpumpe 12 ständig durch eine Ringleitung gefördert wird. Im Unterschied zur in Fig. 1 gezeigten Ausführungsform wird hier Wärme abgeführt und nicht zugeführt. Ansonsten ist der Aufbau ähnlich.

Für jeden der Räume 4e, 4f, 4g und 4h wird je ein eigener Abzweig 5e, 5f, 5g, 5h zum jeweiligen Kondensator 9e, 9f, 9g, 9h geleitet, wo Wärme vom Wärmepumpen-Kreisprozess 7e, 7f, 7g, 7h aufgenommen wird. In den Kondensatoren 9e, 9f, 9g, 9h wird Arbeitsfluid kondensiert und anschließend in den Entspannungsventilen 10e, 10f, 10g und 10h entspannt, wobei es teilweise wieder verdampft. In den nachfolgenden Verdampfern 6e, 6f, 6g und 6h wird es vollständig verdampft und nimmt dabei Wärme auf, oder anders ausgedrückt, liefert Nutzkälte ab. Das verdampfte Arbeitsfluid wird nachfolgend von den Kompressoren 8e, 8f, 8g, 8h verdichtet, wobei es sich erwärmt. Die Wärme wird dann als Abwärme durch die Kondensatoren 9e, 9f, 9g, 9h an die Abzweige 5e, 5f, 5g, 5h an die Ringleitung 13 abgeführt.

Je nach Bedarf können die Räume 4e, 4f, 4g und 4h dabei mit unterschiedlichen Nutzkälte-Abnehmern ausgestattet sein. Das Beispiel zeigt 4e als einen Raum mit einem zwangsbelüfteten Radiator für eine Klimaanlage, Raum 4f mit einem Kühlraum, wie er für Handelsgeschäfte mit Frischwaren typisch ist, Raum 4g mit einer Gefrierkammer, und Raum 4h mit Kühlschlangen, wie sie für eine Wandkühlung, Deckenkühlung oder die Kühlung einer Maschine zum Einsatz kommen. wobei die Nutzkälteabnehmer jeweils mit dem entsprechenden Verdampfer 6e, 6f, 6g und 6h ausgestattet sind.

Auf diese Weise kann jeder der Räume mit den jeweiligen Temperaturverhältnissen und der gewünschten Nutzkälte ausgestattet werden. Die jeweiligen Wärmepumpen-Kreisprozesse 7e, 7f, 7g, 7h können ebenfalls entsprechend unterschiedlich dimensioniert und betrieben werden, vor allem können die Arbeitsfluide entsprechend dem gewünschten Temperaturniveau für die Nutzkälte unterschiedlich gewählt werden. Selbstverständlich können auch hier auf diese Weise auch wesentlich mehr Räume ausgestattet und versorgt werden. Anders als bei herkömmlichen zentralen Wärmepumpen hat der modulare Aufbau den Vorteil, dass problemlos nach- und umgerüstet werden kann, ohne auf Regelungs- oder Sicherheitsprobleme Rücksicht nehmen zu müssen.

Die Mengen der jeweils benötigten Arbeitsfluide pro Wärmepumpe können dabei so gering sein, dass auf aufwändige Sicherheitseinrichtungen verzichtet werden kann, wenn die Füllmengen denen handelsüblicher Haushalts-Kühl- oder Gefrierschränke entsprechen.

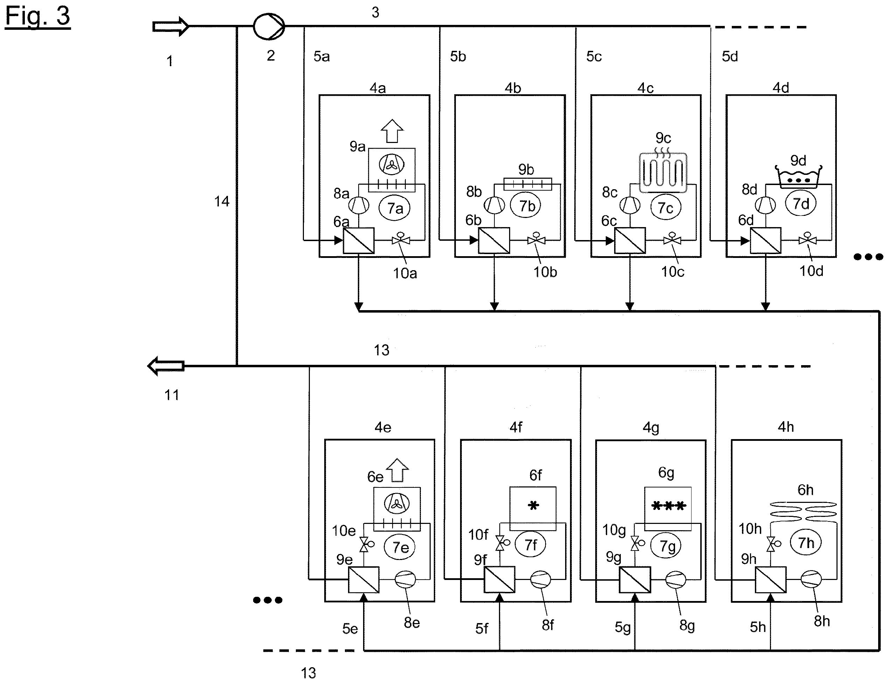

Fig. 3 zeigt einen kombinierten Wärmeträgerfluidkreislauf 3 mit 13 in einem Gebäude, wobei der Wärmeträgerfluidkreislauf an eine Wärmesenke oder Wärmequelle 11 außerhalb des Gebäudes angeschlossen ist und von einer Umwälzpumpe 2 ständig durch eine Ringleitung gefördert wird, die sowohl die Räume mit Wärmeabgabe als auch die mit Nutzkälteabgabe bedient. Im Unterschied zu den in Fig. 1 und Fig. 2 gezeigten Ausführungsformen wird hier sowohl Wärme abgeführt als auch zugeführt. Ansonsten ist der Aufbau ähnlich. Die Wärmeerzeugung und die Wärmeabnahme gleichen sich hierbei zumindest teilweise aus, daher kann die angeschlossene Wärmesenke bzw. Wärmequelle beide Funktionen erfüllen, gegebenenfalls im Tages- oder Jahresverlauf in zeitlich versetzter Weise. Zu diesem Ausgleich dient auch die Verbindungsleitung 14, deren Durchfluss so geregelt werden kann, dass ein größtmöglicher Ausgleich von Wärmeerzeugung und Wärmeabnahme stattfindet.

Während in den Fig. 1 bis Fig. 3 nur Räume gezeigt werden, die jeweils nur mit einer einzigen Nutzungsart ausgestattet sind, können natürlich auch mehrere Nutzungsarten in jedem Raum vorgesehen werden. Dies können Wärmepumpen sein, die über eine Umschaltung zwischen Heizung und Klimatisierung verfügen, aber auch Haushaltsmaschinen mit Warmwasseranschluss und Trocknerfunktion, etwa für Wäschereien.

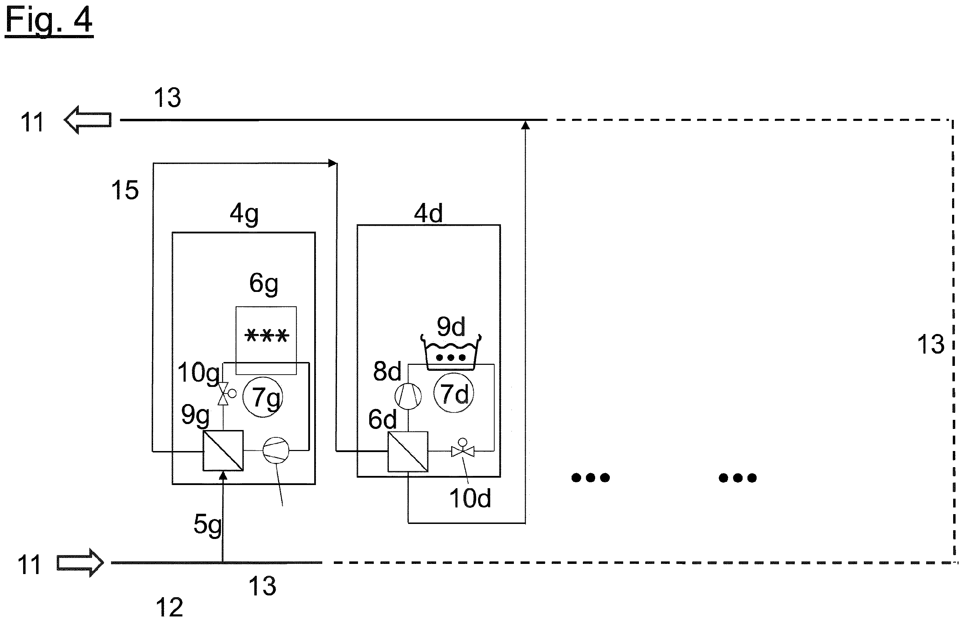

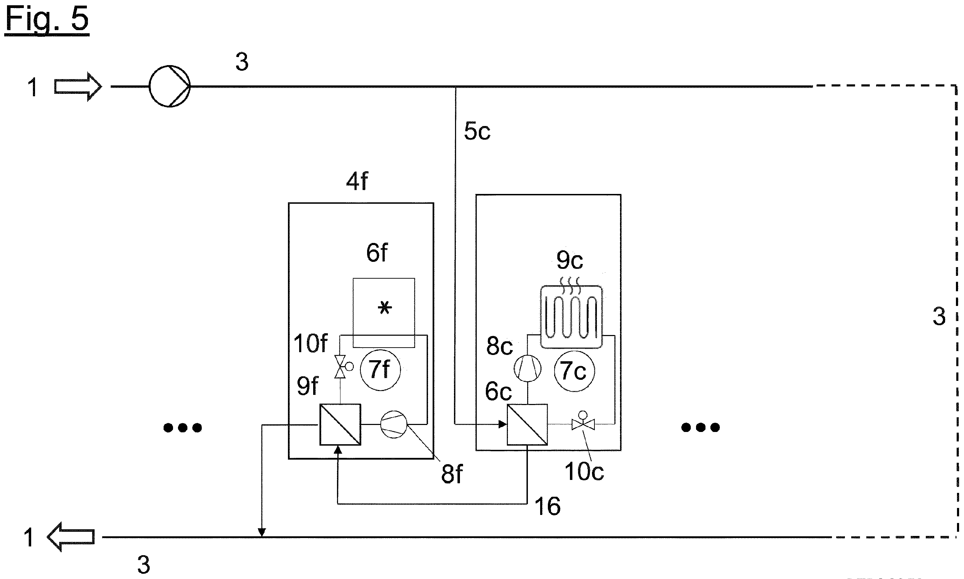

Fig. 4 und Fig. 5 zeigen zwei Beispiele einer kaskadierenden Anordnung. Während kaskadierende Kältekreisläufe beispielsweise bei Kühl-Gefrier-Kombigeräten und bei Niedertemperatur-Wärmepumpen mit Heißwassererzeugung gut bekannt sind, ist es im erfindungsgemäßen Wärmepumpensystem auch möglich, eine Nutzwärmeerzeugung mit einer Nutzkälteerzeugung zu koppeln.

Fig. 4 zeigt eine Kombination einer Gefrieranlage, wie sie in Fig. 2 in Raum 4g gezeigt wird, mit einer Warmwassererzeugung, wie sie in Fig. 1 für Raum 4d gezeigt wird. Hierbei wird der Zulauf des Abzweigs 5g des Wärmeträgerfluids von der Ringleitung 13 zunächst zum Kondensator 9g der Kühlanlage geführt, wobei sich der Ablauf des Wärmeträgerfluids erwärmt. Der durch die Kühlanlage erwärmte Ablauf 15 wird in den Verdampfer 6d der Warmwasseranlage geführt, wobei er sich abkühlt. Dadurch, dass in der Warmwasseranlage eine deutlich geringere Temperaturdifferenz durch die Wärmepumpe 7d zu überwinden ist, erhöht sich durch diese Kaskadierung der Gesamtwirkungsgrad, außerdem kann die Wärmepumpe entsprechend kleiner dimensioniert werden. Der durch die Warmwasseranlage abgekühlte Ablauf 16 des Wärmeträgerfluids wird wieder in die Ringleitung 13 zurückgeführt.

Fig. 5 zeigt eine Kombination einer Fußbodenheizung, wie sie in Fig. 1 für Raum 4c gezeigt wird, mit einer Kühlraumanwendung, wie sie in Fig. 2 in Raum 4f gezeigt wird. Hierbei wird der Zulauf des Abzweigs 5c des Wärmeträgerfluids von der Ringleitung 3 zunächst zum Verdampfer 6c der Warmwassererzeugung für eine Fußbodenheizung im Raum 4f geführt, wodurch sich ein abgekühlter Ablauf 16 des Wärmeträgerfluids ergibt. Dieser abgekühlte Ablauf 16 wird in den Kondensator 9f des Kühlraums 4f geführt, wodurch sich das Wärmeträgerfluid wieder erwärmt. Dadurch, dass im Kühlraum damit eine deutlich geringere Temperaturdifferenz durch die Wärmepumpe 7f zu überwinden ist, erhöht sich durch diese Kaskadierung der Gesamtwirkungsgrad. Der durch die Kühlraumverwendung erwärmte Ablauf wird wieder in die Ringleitung 3 zurückgeführt.

Derartige kaskadierenden Kopplungen sind besonders bei Verbrauchern mit konstanter Last dann vorteilhaft, wenn sich die übertragenden Wärmemengen unter Berücksichtigung der Kompressorleistung ungefähr ausgleichen. Durch die Verschiebung der Temperaturniveaus nach unten oder oben kann es sinnvoll sein, in den gekoppelten Wärmepumpen unterschiedliche Arbeitsfluide einzusetzen. Im Falle von Kohlenwasserstoffen kann, ausgehend von beispielsweise R290, bei tieferen Temperaturen ein niedriger siedendes Alkan, etwa Ethan beigemischt werden, bei höheren Temperaturen bietet sich die Zumischung eines höher siedenden Alkans wie z.B. Butan an. In solchen Fällen ist der sich einstellende Temperaturgleit zu berücksichtigen.

### Bezugszeichenliste

1 Wärmequelle
2 Umwälzpumpe
3 Wärmeträgerfluidkreislauf
4 Raum
5 Abzweig
6 Verdampfer
7 Wärmepumpen-Kreisprozess
8 Kompressor
9 Kondensator
10 Entspannungsventil
11 Wärmesenke
12 Umwälzpumpe
13 Wärmeträgerfluidkreislauf
14 Verbindungsleitung
15 Verbindungsleitung
16 Verbindungsleitung

## Patentansprüche

1. Wärmepumpensystem aus einer Vielzahl von Wärmepumpen zur sicheren Durchführung linksdrehender thermodynamischer Kreisprozesse (7) mittels entzündlicher Arbeitsfluide, die in hermetisch dichten Arbeitsfluidumläufen geführt werden, wobei jede der Wärmepumpen zur Aufstellung innerhalb eines Raumes in einem Gebäude geeignet ist und jeweils ein Wärmepumpengehäuse, mindestens einen Kompressor (8) für Arbeitsfluid, mindestens eine Entspannungseinrichtung (10) für Arbeitsfluid, mindestens einen Kondensator (9) für Arbeitsfluid und mindestens einen Verdampfer (6) für Arbeitsfluid aufweist, wobei
- entweder die Kondensatoren (9) oder die Verdampfer (6) aller Wärmepumpen des Wärmepumpensystems oder beide an eine Ringleitung (3, 13) angeschlossen sind, welche ein Wärmeträgerfluid führt,
- die Ringleitung (3, 13) an eine externe Wärmequelle und/oder an eine Wärmesenke angeschlossen ist,
- die einzelnen Wärmepumpen jeweils über Abzweige (5) von der Ringleitung (3, 13) angeschlossen sind, wobei der Abzweig (5) jeweils eine Zuflussseite und eine Abflussseite bezüglich der Ringleitung (3,13) aufweist,
- die Zuflussseiten und Abflussseiten der Abzweige (5) von der Ringleitung (3,13) so angeordnet werden, dass auf erwärmten Abflussseiten in Strömungsrichtung Zuflussseiten von Wärmenutzungen folgen,
- die Zuflussseiten und Abflussseiten der Abzweige (5) von der Ringleitung (3, 13) so angeordnet werden, dass auf abgekühlte Abflussseiten in Strömungsrichtung Zuflussseiten von Kältenutzungen folgen,
**dadurch gekennzeichnet, dass**
die Menge an entzündlichem Arbeitsfluid in jeder der Wärmepumpen auf insgesamt jeweils 150 Gramm beschränkt wird.

2. Wärmepumpensystem nach Anspruch 1, **dadurch gekennzeichnet, dass** einzelne Wärmepumpen kaskadenartig so mit Verbindungsleitungen verknüpft werden, dass in Kondensatoren erwärmtes Wärmeträgerfluid aus Wärmepumpen für Kältenutzungen durch die Verbindungsleitungen (15) in Verdampfer von Wärmepumpen für Wärmenutzungen geführt werden.

3. Wärmepumpensystem nach Anspruch 1, **dadurch gekennzeichnet, dass** einzelne Wärmepumpen kaskadenartig so mit Verbindungsleitungen (16) verknüpft werden, dass in Verdampfern abgekühltes Wärmeträgerfluid aus Wärmepumpen für Wärmenutzungen durch die Verbindungsleitungen (16) in Kondensatoren von Wärmepumpen für Kältenutzungen geführt werden.
